# EUROPEAN PATENT APPLICATION

(11) **EP 4 699 449 A1**
(43) Date of publication of application: **25.02.2026**
(21) Application number: 25187091.1
(22) Date of filing: 02.07.2025
(51) Int. Cl.: A23J 1/14

(54) **HEMP SEED BASE AND BEVERAGE**

(30) Priority: 02.07.2024 EP 24185880
(71) Applicant: Tetra Laval Holdings & Finance S.A., 1009 Pully (CH)
(72) Inventor: CHEAIB, Rana, 221 86 Lund (SE)
(74) Representative: Tetra Pak Patent Attorneys

(57) **Abstract**

A method (300) for producing a hemp seed base (12) to be used for human consumption is provided. The method (300) comprising: providing (S302) hemp seeds (10a); processing (S304) the hemp seeds (10a) and water (10b) into a hemp seed slurry; introducing (S306) one or more antioxidants (10c) to the hemp seed slurry and obtaining (S316) the hemp seed base (12) from the hemp seed slurry. The disclosure further relates to a method for producing a hemp seed beverage (14) to be used for human consumption.

## Description

### Technical Field

The invention relates to methods for producing a hemp seed base and a hemp seed beverage to be used for human consumption.

### Background

In recent years, there has been a significant increase in the production and consumption of plant-based beverages. This trend is driven by health consciousness, dietary restrictions, environmental concerns, and the growing vegan and vegetarian populations. Many consumers seek alternatives to traditional dairy products due to lactose intolerance, milk allergies, or the desire to reduce cholesterol intake. Additionally, the environmental impact of dairy farming has motivated many to choose plant-based options as a more sustainable choice.

Popular plant-based beverages include almond milk, soy milk, oat milk, rice milk, and coconut milk. Each of these offers unique nutritional profiles and taste characteristics. For example, soy milk is rich in protein, comparable to cow's milk, while almond milk is low in calories and has a subtle nutty flavor. Oat milk is favored for its creamy texture and high fiber content, while coconut milk provides a rich, tropical taste often used in cooking and drinking.

The production of plant-based beverages involves several critical steps to ensure quality, taste, and nutritional value. It starts with selecting and cleaning raw materials such as almonds, soybeans, oats, rice, or coconuts. These are soaked to soften them and activate enzymes, then finely ground to produce a slurry or paste. This mixture undergoes extraction to separate the plant solids from the liquid using methods like pressing, centrifugation, or filtration. The extracted liquid, often called the base, is blended with water and other ingredients, including vegetable fat, to achieve a plant based beverage that has the desired consistency and flavor.

Homogenization ensures a uniform consistency and prevents separation by breaking down fat molecules. The beverage is then pasteurized to kill harmful bacteria and extend shelf life. Finally, the product is packaged in sterile containers to maintain freshness and prevent contamination. If only the base is produced, it is also packaged in sterile containers for use as an ingredient in plant beverages.

Different types of plant-based beverages require different processing methods due to inherent differences in raw materials. For example, soybeans need a different soaking and grinding process compared to almonds, which have a higher fat content and require careful homogenization. Oats need specific enzymes to break down starches for a creamy consistency, while coconuts require distinct extraction techniques. While many plant-based beverages are successfully produced and well-received by consumers, achieving a taste and texture comparable to traditional dairy milk remains challenging. Innovations in processing techniques and ingredient formulations aim to deliver plant-based beverages that are nutritious, environmentally friendly, and enjoyable to drink. This is particularly true for beverages made from hemp seeds.

Hemp seeds are rich in high-quality protein, essential fatty acids (omega-3 and omega-6), and a balanced array of vitamins and minerals. Unlike many other seeds and grains, they contain all nine essential amino acids and are easily digestible, making them a superior nutritional source. However, the fatty acids and amino acids in hemp seeds introduce challenges in producing a hemp seed base and beverage, particularly in ensuring a good smell and taste.

### Summary

It is an object of the invention to at least partly overcome one or more of the above-identified limitations of the prior art. In particular, it is an object to provide a hemp seed base and a hemp seed beverage, particularly in ensuring a good smell and taste. Another object is to provide a stable hemp seed base and hemp seed beverage.

One or more of these objectives, as well as further objectives that may appear from the description below, are at least partly achieved by methods according to the following aspects.

A first aspects relates to a method for producing a hemp seed base to be used for human consumption, the method comprising:
providing hemp seeds;
processing the hemp seeds and water into a hemp seed slurry;
introducing one or more antioxidants to the hemp seed slurry, and
obtaining the hemp seed base from the hemp seed slurry.

The method of the first aspect may be advantageous as it allows for producing a stable hemp seed base for further processing. The further processing may be performed immediately after the hemp seed base has been formed or the hemp seed base may be stored on the shelfs and the further processing may be performed at a later stage. Especially the step of introducing the antioxidants to the hemp seed slurry provides for stabilizing the hemp seed base obtained from the hemp seed slurry as well as the hemp seed slurry itself during production of the hemp seed base. This is achieved due to that the antioxidants are introduced at an early stage in the production. This may be further advantageous as it provides for producing a hemp seed beverage by using the hemp seed base, wherein the hemp seed beverage may have a high nutritional value, and which may be enjoyable to drink.

Thus, the method may be advantageous as it allows for producing a stable hemp seed base in which oxidation is avoided and the flavor and quality is maintained.

The formed hemp seed base may be advantageous as it allows for an environmentally friendly plant-based product. Thus, an overall improved hemp seed base may be produced.

In some embodiments the water, in the processing of the hemp seeds and water, has a temperature of 1-25°C, or 5-10°C.

This may advantageous as it allows for counteracting increased temperatures which may occur in the processing of the hemp seeds and water. Thus, a stable and controllable processing step may be achieved.

In some embodiments, the method comprising maintaining the hemp seed base at a temperature below 40°C from the processing the hemp seeds until the hemp seed base is subjected to an ultra-high temperature, UHT, process.

This may be advantageous as it provides for keeping the temperature of the hemp seed base at a favorable level, i.e. below a maximum temperature value, such that an efficient production is achieved. This may be further advantageous as it provides for a suitable environment for the hemp seed base during production and especially in relation to fat particles comprised in the base.

In some embodiments, the method comprising maintaining the hemp seed base at a temperature above 6°C from the processing the hemp seeds until the hemp seed base is subjected to the UHT process.

This may be advantageous as it provides for keeping the temperature of the hemp seed base at a favorable level, i.e. above a minimum temperature value, such that an efficient production is achieved.

In some embodiments, the introducing the one or more antioxidants comprises dosing the one or more antioxidants to the hemp seed slurry with a rate of 1-15 I/h, or 3-8 I/h.

This may be advantageous as it allows for introducing the one or more antioxidants in an accurate and efficient way.

In some embodiments, at least one of the one or more antioxidants is a rosemary extract, tocopherol, or vitamin C.

This may be advantageous as it provides a natural, effective way to preserve quality, enhance shelf life, and improve the nutritional value, meeting both manufacturer and consumer needs. The rosemary extract may be advantageous as it provides for oxidation prevention, flavor stabilization and color preservation. The tocopherol may be advantageous as it provides for prevention of rancidity and nutrient enrichment. The vitamin C may be advantageous as it provides for an improved shelf life of the product and flavor preservation.

In some embodiments, the hemp seed base has a total rosemary extract content in the range of 0.001-0.01% by weight.

This may be advantageous as it allows for that a stable hemp seed base is provided with a minimum oxidizing taste. Thereby, a beverage which is nutritious, environmentally friendly, and enjoyable to drink may be produced from the hemp seed base.

In some embodiments, the introducing the one or more antioxidants to the hemp seed slurry comprises dosing the one or more antioxidants to the hemp seed slurry within less than 60 minutes from the processing the hemp seeds.

This may be advantageous as it allows for that an improved stability of the hemp seed base is achieved if the antioxidants are introduced to the hemp seed slurry as early as possible in the process.

In some embodiments, the method comprising, prior to processing the hemp seeds, introducing the one or more antioxidants to the water.

This may be advantageous as it allows for that an improved stability of the hemp seed base is achieved if the antioxidants are introduced to the hemp seed slurry as early as possible in the process.

In some embodiments, the method comprising introducing one or more enzymes to the hemp seed slurry and hydrolyzing the hemp seed slurry.

This may be advantageous as it allows for that carbohydrates in the slurry may be breaked down into component sugar molecules by hydrolysis. The one or more enzymes affect the texture and taste of the hemps seed base in a beneficial way.

In some embodiments, at least one of the one or more enzymes (10e) is Ultraflo XL, Ultraflo Max, Protamex, Neutrase or Formea Prime.

A second aspect relates to a method for producing a hemp seed beverage to be used for human consumption, the method comprising:
producing a hemp seed base according to the first aspect, and
mixing and processing the hemp seed base and one or more ingredients to form the hemp seed beverage.

This may be advantageous as it allows that a balanced and tasty hemp seed beverage is provided. This may be achieved by using the hemp seed base according to the first aspect in combination with processing the hemp seed base and the one or more ingredients according to the second aspect.

This may be further advantageous as it allows for producing a hemp seed beverage with a desired consistency and flavor and which ensures quality and nutritional value.

In some embodiments, the introducing one or more further antioxidants during the producing of the hemp seed beverage, to thereby give the hemp seed beverage a total antioxidant content in the range of 0.001-0.01 % by weight.

This may be advantageous as it allows for an improved hemp seed beverage in a context of stability and oxidizing risk.

In some embodiments, the method comprises introducing one or more aromas during the process of producing the hemp seed beverage for masking and/or reducing at least one undesired taste characteristic, to thereby give the hemp seed beverage a total aroma content in the range of 0.05-0.25% by weight.

This may be advantageous as it allows for producing a hemp seed beverage which is tasty and has a pleasant mouthfeel.

In some embodiments at least one of the one or more aromas is a masker cereal, vanilla aroma, citrus aroma, or mint aroma.

In some embodiments the method comprising performing a UHT process on the hemp seed beverage immediately after the hemp seed beverage is formed, without performing any intermediate storing of the hemp seed beverage before the UHT process.

This may be advantageous as it allows for producing a stable and tasty hemp seed beverage in a time-efficient and cost-efficient way.

Features, advantages and embodiments described for a certain aspect apply, i.e. may be implemented, for the other aspects described herein. Further objectives, features, aspects and advantages of the invention will appear from the following detailed description as well as from the drawings.

### Drawings

Fig. 1 is a sequence diagram of an example method for producing a hemp seed base to be used for human consumption.
Fig. 2 is a sequence diagram of an example method for producing a hemp seed beverage to be used for human consumption.
Fig. 3 is a flowchart illustrating steps of a method for producing a hemp seed base to be used for human consumption.
Fig. 4 is a plot diagram illustrating how many participants that detect an oxidized taste in different test samples.

### Description

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. Accordingly, the terms "a" and/or "an" shall mean "at least one" or "one or more", even though the phrase "one or more" or "at least one" is also used herein. The terms "multiple", "plural" and "plurality" are intended to imply provision of two or more elements. The term "and/or" includes any and all combinations of one or more of the associated listed elements. Although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

Like reference signs refer to like elements throughout.

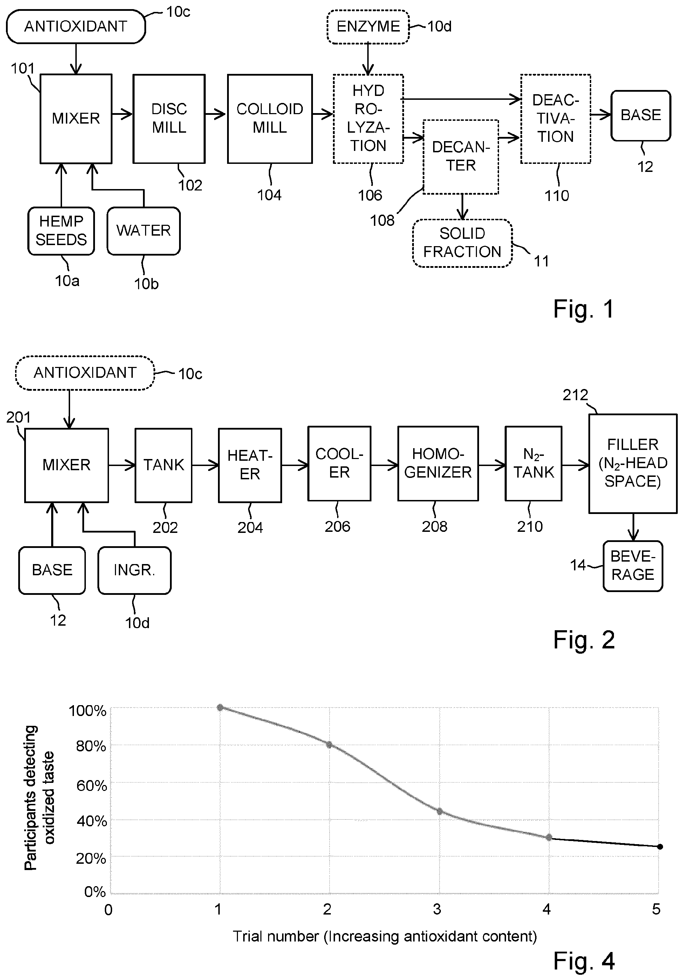

Fig. 1 illustrates a sequence diagram of a method for producing a hemp seed base 12 to be used for human consumption by way of example.

The method for producing the hemp seed base 12 comprises providing hemp seeds 10a, water 10b and one or more antioxidants 10c in a mixer 101 in which the ingredients are mixed. The hemp seeds 10a, water 10b and one or more antioxidants 10c may be introduced in the mixer 101 in different orders. By way of example, the hemp seeds 10a and the water 10b are provided to the mixer 101 and processed into a hemp seed slurry. Thereafter, the one or more antioxidants 10c are introduced to the hemp seed slurry. The step of processing the hemp seeds 10a and water 10b may be performed after introducing the one or more antioxidants 10c to the water 10b. Thus, in this way, the one or more antioxidants may be introduced into the water 10b and thereafter, the hemp seeds 10a may be introduced to a water flow mixture comprising water 10b and antioxidants 10c. A further example, the processing the hemp seeds 10a and water 10b, and the introducing the one or more antioxidants 10c may be performed simultaneously such that the hemp seed 10a and the antioxidants 10c are introduced to the water 10b at the time. A yet further example, the processing the hemp seeds 10a and water 10b, and the introducing the one or more antioxidants 10c may be performed in an alternating way such that antioxidants 10c may be introduced to the water 10b, thereafter the hemp seeds 10a, and thereafter more antioxidants 10c or the like. It should be noted that the hemp seeds 10a, water 10b and one or more antioxidants 10c may be introduced in other ways as well.

As used herein, "hemp seeds" refers to hulled hemp seeds or de-hulled hemp seeds. It should preferably be prevented to crush the hemp seeds 10a before coming in contact with water 10b and antioxidants 10c. Thus, the hemp seeds 10a provided to the mixer 101 should be whole seeds. It should however be noted that when the seed coat is removed, the seed is split into two pieces. This is not the same as the hemp seed being crushed.

As used herein, "hemp seed base" refers to a concentrate that is suitable as starting material for further formulations into hemp seed beverages or other hemp seed-based products used for human consumption. The base may be seen as a "precursor" or ingredient that is used for a final hemp seed-based product. Typically, the base lacks one or more properties that makes it enjoyable for human consumption, for example in terms of taste and/or texture. The base may be stored and delivered to customers which themselves blended the base with water and other ingredients. Optionally, the base may be immediately (i.e. within ten minutes from the hemp seed base is formed) blended with water and other ingredients to form a hemp seed beverage which in turn may be delivered to the customer. This will be discussed in more detail further below.

As used herein, "hemp seed slurry" refers to a mixture of solids denser than water suspended in liquid. The hemp seed slurry may be processed to achieve an adequate particle size of hemp seeds and water.

The antioxidants 10c are introduced to the hemp seed slurry to inhibit oxidation, such as oxidative rancidity, which occurs when fats oxidize. This may lead to off-flavors, off-odors, and potential loss of nutritional value, which are something which should be avoided when providing the hemp seed base 12. The antioxidants 10c are also introduced to maintaining nutritional quality, i.e. the antioxidants 10c helps to preserve vitamins sensitive to oxidation, such as vitamins A, C and E, but also minerals which may protect sensitive nutrients from degradation. The antioxidants 10c are also introduced to enhance shelf life, ensuring they remain safe and palatable for longer periods. This is achieved by preventing oxidation. The antioxidants 10c are also introduces for color preservation. Thus, oxidation may cause discoloration in the hemp seed base 12 and the antioxidants 10c help maintain the natural color of the hemp seed base 12. Thus, the antioxidants 10c are further introduced to provide a stable and favorable hemp seed base 12. By way of example, at least one of the one or more antioxidants 10c may be a rosemary extract, tocopherol, or vitamin C. If the at least one of the one or more antioxidants 10c is the rosemary extract, the hemp seed base 12 may have a total rosemary extract content in the range of 0.001-0.01 % by weight. As used herein, "by weight" is relative a batch weight. The hemp seed base 12 may have a total rosemary extract content in the range of 0.004-0.006 % by weight, preferably 0.005% by weight.

When the hemp seed slurry which comprises the hemp seeds 10a, the water 10b and the one or more antioxidants 10c is formed, the hemp seed slurry is further processed by a disc mill 102, in one or more passes, and then by a colloid mill 104, in one or more passes. The colloid mill may be advantageous as it allows for preventing foaming when processing the ingredients into the hemp seed base 12. As used herein, a "disc mill" refers to a perforated disc mill, in which a knife element rotates close to a perforated disc to process an incoming material as it is feed axially towards the rotating knife. This creates cutting and impact forces that reduce the size of the material and force the material through holes or apertures in the disc. Perforated disc are available with a range of aperture sizes. Preferably, the gap of the colloid mill was adjusted to a smallest size, gap size 1. As used herein, a "colloid mill" is used in its ordinary meaning and comprises a static cone (stator) and a rapidly rotating cone (rotor), which form a gap in which fluid material is milled ("wet milling"). In a cross-toothed colloid mill, at least one of the stator or rotor comprises a surface pattern of crossed grooves forming a cross-toothed pattern.

The step of processing the hemp seed slurry by the disc mill 102 and the colloid mill 104 is followed by a hydrolyzation step in which one or more enzymes 10d are added to the slurry to break down carbohydrates in the slurry into component sugar molecules by hydrolysis. The enzymes 10d typically include a carbohydrase. The one or more enzymes 10d affect the texture and taste of the hemps seed base 12. Thus, a measured and well-balances enzyme mixture should be used. By way of example, at least one of the one or more enzymes 10d is Ultraflo XL, Ultraflo Max, Protamex, Neutrase or Formea Prime. Further, if needed, the hydrolyzation step may also comprise introducing more water 10b to the hemp seed slurry. The hydrolyzation is performed by using a hydrolyzation tank 106 well known in the art.

The hydrolyzation step is followed by separation step in which the slurry is separated into liquid and solid fraction11. The solid fraction 11 is removed from further processing. The separation step may involve centrifugation, in which the slurry is subjected to high-speed centrifugal forces, pressing, or filtration. For example, if the separation step involves centrifugation, the separation may be performed by use of one or more decanters 108. Decanters are well-known in the art and are therefore not discussed in further detail in this application. The purpose of the separation step is to remove insoluble solids that are larger than a predetermined size from the slurry and thereby being able to achieve a desired consistent of the hemp seed base 12.

The separation step is followed by a deactivation step in which the liquid from the separation step, and/or the hemp seed slurry from the hydrolyzation step, is processed to enzyme deactivation. This is performed by using a deactivation unit 110 well known in the art. By deactivating the enzymes, it may be possible to prevent undesirable reactions that may affect the quality, safety, and shelf life of the hemp seed base 12. This is important due to that the enzymes may impact the flavor, texture, and nutritional value of the hemp seed base 12. Thus, the deactivation thereby terminates the hydrolyzation step. The deactivation step may involve heat treatment, steam injection and/or be performed in one or more heat exchangers. For example, if the deactivation step involves heat treatment, the deactivation may be performed by ultra-high temperature (UHT) processing, i.e. heating the liquid and/or the hemp seed slurry to a predetermined temperature for a predetermined time period, as is known in the art. The deactivated liquid and/or hemp seed slurry forms the hemp seed base 12, which is output for further processing. The further processing may be performed immediately after the hemp seed base 12 has been formed or the hemp seed base 12 may be stored on the shelfs and the further processing may be performed at a later stage.

Preferably, from the processing step, processing the hemp seeds 10a and water 10b, until the obtaining step, and especially to the deactivation step of the obtaining step, the temperature of the hemp seed base 12 is maintained at a temperature below 40°C. The hemp seed base 12 may be maintained at different temperatures, such as below 30°C, preferably below 20°C, more preferably below 16°C. Preferably, from the processing step, processing the hemp seeds 10a and water 10b, until the obtaining step, and especially to the deactivation step of the obtaining step, the temperature of the hemp seed base 12 is maintained at a temperature above 6°C. The hemp seed base 12 may be maintained at different temperatures, such as above 10°C, preferably above 8°C. The step of maintaining the hemp seed base 12 at the temperature below 40°C may involve cooling treatments, providing a rapid processing, jacked vessels or the like.

As used herein, from the step of processing the hemp seed slurry by the disc mill to the step of deactivation step together forms an obtaining step in which the hemp seed base is formed.

Fig. 2 illustrates a sequence diagram of a method for producing a hemp seed beverage 14 to be used for human consumption by way of example. The method in Fig. 2 is a non-limiting example, given to exemplify how the hemp seed base 12 may be used to produce a hemp seed beverage 14. Test examples used for forming the hemp seed beverages are illustrated and discussed in more detail further below.

The example method comprises mixing the hemp seed base 12, produced as discussed above, and one or more further ingredients 10d in a mixer 201 such as a high-shear mixer. As used herein, a "high-shear mixer" comprises a mixing device, for example in form of a rotor, paddle, propeller, vane, turbine etc., such that the mixing device has a peripheral speed of at least 10 m/s, at least 15 m/s, or at least 20 m/s. The mixing device may in some implementations be surrounded by a stator for increasing the high shear mixing effect. The high-shear mixer is a batch mixer that is arranged in a vessel to process fluid material in batches, possibly with recirculation of the fluid material during mixing. If needed, one or more antioxidants 10c is also introduced in the mixer 201. As indicated by the dotted line, introducing the one or more antioxidants 10c is an optional step. The hemp seed base 12, the ingredients 10d and the antioxidants 10c (herein after referred to as "the mixture") may be provided in the mixer 201 in different orders. By way of example, water (being referred to as a further ingredient) may be added to the mixer 201 and thereafter further ingredients 10d and antioxidants 10c. This mixture may be processed for a predetermined time period and thereafter more further ingredients 10d may be added to the mixture and processed for a predetermined time period. Thereafter, the hemp seed base 12 may be introduced to the mixture and processed for yet a further predetermined time period. Once the mixture has been processed for a total predetermined time period, it is transferred to a tank 202, such as a balance tank or storage tank. Preferably, introducing the hemp seed base 12, the further ingredients 10d and the antioxidants 10c should be done by vacuum, if possible. The different predetermined time periods may be between 1-10 minutes, preferably 3-5 minutes.

By way of example, the ingredients 10d may include one or more of vegetable oil, flavoring, sweetener, salt, thickener, stabilizer, vitamin, or mineral.

Although not illustrated in Fig. 2, the method may further comprise introducing one or more aromas in the mixer 201. The aromas are introduced for masking and/or reducing at least one undesired taste characteristics. The hemp seed beverage 14 may comprise a total aroma content in the range of 0.05-0.25% by weight. Preferably, the total aroma content is in the range of 0.1-0.2% by weight, more preferably 0.15% by weight. As used herein, the "by weight" refers to a weight relative a batch weight. At least one of the one or more aromas is a masked cereal, vanilla aroma, citrus aroma, or mint aroma.

From the tank 202 (or from the mixer 201 if the tank 202 is excluded), the mixture is transported to one or more heaters 204, or a heat treatment device. The one or more heaters 204 are arranged for preheating the mixture to a first predetermined temperature. The first predetermined temperature may preferably not be above 70°C in order to avoid denaturation at this step. Thereafter, the mixture is further heated to a second predetermined temperature for a predetermined time period (typically a few seconds). The second predetermined temperature is 120-180°C, preferably 130-160°C, more preferably 140-150°C, even more preferably 145°C. As said, the preheating and the heating is performed by one or more heat treatment means 204 known in the art. The one or more heaters 204 may be a heat exchanger and/or a pasteurizer.

Thereafter, the mixture is transported to a cooler 206 arranged for cooling the mixture to a predetermined temperature. The predetermined temperature is 60-80°C, preferably 70°C. The step of cooling is performed by one or more cooling means 206 known in the art. The cooling is typically a flash cooling done by vacuum. As used herein, "flash cooling done by vacuum" is referred to a technique to rapidly cool any product which comprises water. The driving force behind this technique is the use of evaporative cooling principles. As the vapor pressure of a liquid decreases, so does its boiling point.

Thereafter, the mixture is transported to a homogenizer 208 in which the mixture from the previous steps is processed to ensure that for example fat is evenly distributed throughout the mixture (breaks all particles and evenly distribute). The homogenization step is performed by using a homogenizer 208 known in the art. As used herein, a "high-pressure homogenization" refers to a process in which a fluid is forced under high pressure through a narrow slot or gap, which causes a breakdown of the particles in the fluid due to cavitation, shearing, and collision. Conventionally, the pressure is in the range of 40-2000 bar. Correspondingly, a "high-pressure homogenizer" is a device configured to perform high-pressure homogenization. Such a device may comprise a mechanical structure that defines the gap, which may or may not be adjustable, and a pumping mechanism for generating the pressure to drive the fluid into the structure and through the gap. Thereafter, the mixture may be cooled down as much as possible, preferably to about 8-10°C.

Thereafter, the mixture is transported to a tank with nitrogen, a so called N₂-tank, 210. The N₂-tank 210 is a tank known in the art which is able to continuously agitate the hemp seed beverage 14 to ensure a homogeneous consistency of the product.

In a final step, the mixture is transported to a filling machine in which the hemp seed beverages, formed by using the previous steps, is filled and enclosed in a suitable package for distribution. The filling step includes providing a N₂-head space in the package. As used herein, "head space" is a space defined in the upper part of the package in which no product is comprised. In order to provide for a hemp seed beverage with a long shelf life, this space is filled with nitrogen. This is to avoid oxidization of the hemp seed beverage when filled in the packages.

As used herein, from the step of preheating the mixture by the heater 204 to the step of transporting the mixture to the N₂-tank together forms an ultra-high temperature (UHT) process in which the hemp seed beverage is formed. UHT process is well known in the art and is a food processing technology that sterilizes liquid food by heating it above 140°C, which is the temperature required to kill bacterial endospores.

The UHT process is preferably performed immediately after the hemp seed beverage 14 is formed, without performing any intermediate storing of the hemp seed beverage 14 before the UHT process. Thus, the tank 202 of Fig. 2 is preferably excluded. As used herein, the term "immediately after" refers to that no intermediate storage between the processing the hemp seed base and the one or more ingredients into the hemp seed beverage and the UHT process. However, there may be a balance tank present between the processing the hemp seed base and the one or more ingredients into the hemp seed beverage and the UHT process. Thus, the balance tank is not defined as an intermediate storage tank. The UHT process should be performed within 10 minutes after the hemp seed beverage is formed. The UHT process should preferably be performed within less than 10 minutes, more preferably within less than seven minutes, even more preferably within less than four minutes, after the hemp seed beverage is formed.

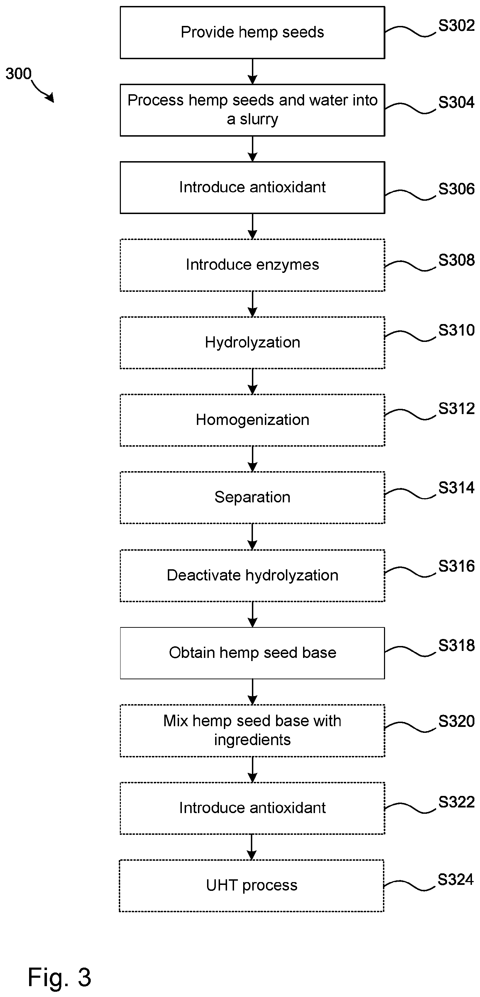

Fig. 3 is a flowchart of an example method 300 for producing a hemp seed beverage 14 based on a hemp seed base 12 as discussed above. In some embodiments, the method 300 corresponds to the methods described above with reference to Figs 1 and 2.

In step S302, hemp seeds 10a are provided. The hemp seeds 10a are hulled or dehulled hemp seeds.

In step S304, the hemp seeds 10a are processed with water 10b into a hemp seed slurry. Preferably, the hemp seeds 10a are introduced into a water flow to achieve a desired ratio of hemp seeds 10a and water 10b. By way of examples, there may be provided 3-20%, preferably 5-15%, hemp seed base of the total amount. Consequently, there may be provided 80-97%, preferably 85-95%, water of the total amount. In the step of processing S304 the hemp seeds 10a and the water 10b, the water 10b has preferably a temperature of 1-25°C or 5-10°C.

In step S306, one or more antioxidants 10c are introduced to the hemp seed slurry. Preferably, the antioxidants 10c are dripped or dosed into the hemp seed slurry. The antioxidants 10c may be dosed to the hemp seed slurry with a rate of 1-15 l/h or 3-8 I/h. The one or more antioxidants 10c may be dosed into the hemp seed slurry within less than 60 minutes from the step of processing the hemp seeds 10a. The one or more antioxidants 10c may be dosed into the hemp seed slurry within less than 40 minutes from the step of processing the hemp seeds 10a, preferably less than 20 minutes, more preferably less than 10 minutes, even more preferably less than 1 minute. The antioxidants 10c should preferably be introduced into the hemp seed slurry as soon as possible in order to achieve a hemp seed base 12 with desired characteristics. At least one of the one or more antioxidants 10c is a rosemary extract, tocopherol, or vitamin C.

In step S308, one or more enzymes 10d is introduced to the hemp seed slurry. It should be noted that in this step, the hemp seed slurry comprises the hemp seeds 10a, the water 10b and the one or more antioxidants 10c.

In step S310, a hydrolyzation of the hemp seed slurry is performed by the one or more enzymes during a predefined time period.

In step S312, a homogenization of the hemp seed slurry is performed by a homogenizer. This is to ensure that the hemp seed slurry has a uniform composition and consistency. This is achieved by breaking down fat globules present in the hemp seed slurry into much smaller, uniformly sized particles.

In step S314, a separation of the slurry is performed in which the slurry is separated into liquid and solid fraction 11.

In step S316, the liquid from step S314 and/or the hemp seed slurry from step S312 is processed for deactivation of the one or more enzymes.

In step S318, hemp seed base is obtained from the slurry from step S316. Step S318 may comprise collecting the hemp seed base in a tank or other vessel for subsequent final processing into a hemp seed beverage or directly transferring the hemp seed base for final processing (as illustrated in Fig. 3).

Thus, in step S320, the hemp seed base from step S318 is mixed with one or more ingredients 10d.

In step S322, one or more antioxidants 10c are introduced to the mixture of hemp seed base 12 and the one or more ingredients 10d.

In step S324, an ultra-high temperature (UHT) process is performed to the product from S322 such that the hemp seed beverage is formed.

Even though illustrated and described in a certain order, other orders may also be used.

A number of trials were performed, wherein different test examples (or receipts) were used. The purpose of performing these trials was, among other things, to determine if any oxidized taste or bitterness was indicated in the hemp seed beverage 14. The trials were carried out according to the methods discussed above.

### Trial no 1: Hemp seed base:

| **Ingredient** | **Percentage** | **Amount (kg)** |
|---|---|---|
| Water | 89 | 809 |
| Hemp seeds | 11 | 99 |
| Total per batch | 100 | 900 |

### Trial no 1: Test example 1

| **Ingredient** | **Percentage** | **Amount (kg)** |
|---|---|---|
| Hemp seed base | 52.4 | 209.6 |
| Sunflower oil | 1 | 4 |
| Gellan gum ALP | 0.03 | 0.12 |
| Masker cereal | 0.1 | 0.4 |
| Modulator mouthfeel cream | 0.1 | 0.4 |
| Sugar | 0.7 | 0.4 |
| Salt | 0.1 | 0.4 |
| SHMP (sodium hexametaphosphate) | 0.02 | 0.08 |
| Water | 46.15 | 184.6 |
| Total | 100 | 400 |

### Trial 1: Test example 2

| **Ingredient** | **Percentage** | **Amount** |
|---|---|---|
| Hemp seed base | 52.4 | 209.6 |
| Sunflower oil | 1 | 4 |
| Gellan gum ALP | 0.03 | 0.12 |
| Masker cereal | 0.1 | 0.4 |
| Modulator mouthfeel cream | 0.1 | 0.4 |
| Chickpea protein isolate | 0.5 | 2 |
| Sugar | 0.7 | 2.8 |
| Salt | 0.1 | 0.4 |
| SHMP | 0.02 | 0.1 |
| Water | 45.05 | 180.2 |
| Total | 100 | 400 |

Trial no 1 had no antioxidants, neither in the hemp seed base nor in the text example 1 or 2. In this trial, a rapid oxidation rate of the hemp seed base and the hemp sed beverage was observed. A difference between test examples 1 and 2 is that test example 2 comprises chickpea protein isolate. This was introduced to form a beverage with more proteins compared to the beverage formed from test example 1.

### Trial 2: Hemp seed base

| **Ingredients** | **Percentage** | **Amount (kg)** |
|---|---|---|
| Water | 89 | 801 |
| Hemp seeds | 11 | 99 |
| Rosemary extract | 0.005 | 0.045 |
| Total | 100 | 900 |

### Trial 2: Test example 1

| **Ingredient** | **Percentage** | **Amount (kg)** |
|---|---|---|
| Hemp seed base | 53 | 212 |
| Gellan gum ALP | 0.03 | 0.12 |
| Masker cereal | 0.15 | 0.6 |
| Modulator mouthfeel cream | 0.15 | 0.6 |
| Dipotassium Phosphate | 0.5 | 2 |
| Sugar | 3 | 12 |
| Salt | 0.1 | 0.4 |
| SHMP | 0.02 | 0.08 |
| Water | 43 | 172 |
| Total | 100 | 400 |

### Trial 2: Test example 2

| **Ingredient** | **Percentage** | **Amount (kg)** |
|---|---|---|
| Hemp seed base | 33 | 132 |
| Sunflower oil | 1 | 4 |
| Gellan gum ALP | 0.03 | 0.12 |
| Sugar | 0.7 | 2.8 |
| Masker cereal | 0.15 | 0.6 |
| Modulator mouthfeel cream | 0.15 | 0.6 |
| Salt | 0.1 | 0.4 |
| SHMP | 0.02 | 0.08 |
| Rosemary extract | 0.005 | 0.2 |
| Water | 65 | 259.2 |
| Total | 100 | 400 |

Trial no 2 had 0.005% rosemary extract (antioxidant) in the hemp seed base. Test example 2 had 0.005% in the hemp seed beverage as well (i.e. added more antioxidants when forming the beverage). Trial no 2 will be discussed in more detail further below in relation to trial no 3.

### Trial 3: Hemp seed base

| **Ingredient** | **Percentage** | **Amount (kg)** |
|---|---|---|
| Water | 89 | 801 |
| Hemp seeds | 11 | 99 |
| Rosemary extract | 0.005 | 0.045 |
| Total | 100 | 900 |

### Trial 3: Test example 1

| **Ingredient** | **Percentage** | **Amount (kg)** |
|---|---|---|
| Hemp seed base | 45 | 180 |
| Gellan gum ALP | 0.03 | 0.12 |
| Masker cereal | 0.15 | 0.6 |
| Modulator mouthfeel cream | 0.15 | 0.6 |
| Dipotassium Phosphate | 0.8 | 3.2 |
| Sugar | 1.5 | 6 |
| Salt | 0.1 | 0.4 |
| SHMP | 0.02 | 0.08 |
| Water | 52.25 | 209 |
| Total | 100 | 400 |

### Trial 3: Test example 2

| **Ingredient** | **Percentage** | **Amount (kg)** |
|---|---|---|
| Hemp seed slurry | 33 | 132 |
| Sunflower oil | 1 | 4 |
| Gellan gum ALP | 0.03 | 0.12 |
| Sugar | 0.9 | 3.6 |
| Masker cereal | 0.15 | 0.6 |
| Modulator mouthfeel cream | 0.15 | 0.6 |
| Salt | 0.1 | 0.4 |
| SHMP | 0.02 | 0.08 |
| Rosemary extract | 0.005 of the oil | 0.2 |
| Water | 64.65 | 258.6 |
| Total | 100 | 400 |

Trial no 3 had 0.005% rosemary extract (antioxidant) in the hemp seed base. Test example 3 had 0.005% in the hemp seed beverage as well (i.e. added more antioxidants when forming the beverage).

As indicated, for these test examples, different amounts of antioxidants were used. Trial no 1 had no antioxidants, neither in the hemp seed base nor in the final hemp seed beverage. Trial no 2 and 3 had the same amounts of antioxidants in the hemp seed base. In trial no 1, a rapid oxidation rate weas observed in the test examples 1 and 2. To overcome this rapid oxidation rate, antioxidants were included in trials no 2 and 3, respectively. Since trial no 1 had no antioxidants, this trial will not be discussed in more detail. Instead, trial no 2 and 3 will be discussed further.

Test example 1 of trial no 2 and 3, respectively, relates to the same product comprising the same ingredients but with different amounts. Test example 1 of trial no 3 comprised 50% less sugar compared to test example 1 of trial no 2. The sweetness of trial no 3 was regarded more balanced and meet outlined preferences according to persons which tested the test samples. A further difference was that test example 1 of trial no 3 comprised 45% hemp seed base and 52.25% water compared to the test example 1 of trial no 2 which comprised 53% hempseed base and 43% water. A yet further difference was that test example 1 of trial no 3 comprised 0.8% Dipotassium Phosphate compared to the test example 1 of trial no 2 which comprised 0.5% Dipotassium Phosphate.

Test example 2 of trials no 2 and 3, respectively, relates to the same product comprising the same ingredients but with different amounts. Test example 2 of trial no 3 comprised 33% hemp slurry compared to the test example 2 of trial no 2 which comprised 33% hemp seed base. Test example 2 of trial no 3 comprised 38% more sugar (from 0.7% to 0.9%) compared to the test example 2 of trial no 2 which, according to the test persons, was perceived better in taste. The taste of the beverage was very plain, compared to previous trials. The test examples 2 of trials no 2 and 3 comprised 0.005% rosemary extract of the oil compared to the test examples 1 of the trials no 2 and 3 which had no antioxidants (apart from the antioxidants comprised in the hemp seed base).

Trial no 3, example test 1 included taste samples that were tested by 68 persons.

With reference to Fig. 4 a plot diagram is illustrated in which the x-axis indicates the test example number (i.e. test 1, 2, etc.), and the y-axis indicates how many of these 68 persons that detected an oxidized taste. As used herein, an "oxidized taste" refers to an undesirable flavor that develops due to the oxidation of fats in the dairy. This process can occur when dairy products are exposed to light, air (oxygen), or certain metals like copper or iron. The oxidation of lipids results in the formation of compounds such as aldehydes, ketones, and free fatty acids, which contribute to the off flavor. Common descriptions of the oxidized taste include cardboard-like, metallic, or even painty flavors. The flavor can also be perceived as rancid or bitter, similar to the taste of old or stale oils. The oxidized taste may occur if the product is exposed to light, oxygen exposure, contact with metals and improper storage conditions such as high temperatures.

Example test 1 was performed with five different tests in which the amount of rosemary extract was varied. In test 1, no antioxidant was included and hence, 100% of the persons detected an oxidized taste. In test 2, 0.0005% rosemary extract was included and 80% of the persons detected an oxidized taste. In test 3, 0.001% rosemary extract was included and 42% of the persons detected an oxidized taste. In test 4, 0.005% rosemary extract was included and 31% of the persons detected an oxidized taste, In test 5, 0.1% rosemary extract was included and 22% of the persons detected an oxidized taste. Thus, with reference to Fig. 4, rosemary extract content in the range of 0.001-0.01% by weight covers test 3 to 5 which are the most successful test samples.

Four additional tests were performed to investigate the effect of the timing of antioxidant introduction in the hemp seed slurry.

Test 1: A hemp seed base was produced according to the method illustrated in Fig. 1, utilizing mixer 101, disc mill 102, colloid mill 104, enzyme hydrolysis 106 with enzyme 10d, separation of a solid fraction 11 using a decanter 108, and enzyme deactivation 110. Hemp seeds and water were introduced into mixer 101 without any antioxidants. The resulting base comprised 89 wt% water and 11 wt% hemp seeds.

Test 2: This test followed the same procedure as Test 1, with the addition of rosemary extract as an antioxidant introduced in the hydrolysis tank. The rosemary extract was dosed to correspond to 0.005 wt% of the mixture.

Test 3: Similar to Test 2, except no solid fraction was removed, i.e., the decanter 108 was omitted, resulting in a whole fiber base. Thus, rosemary extract was introduced in the hydrolysis tank at a level of 0.005 wt% of the mixture.

Test 4: This test was performed identically to Test 3, except that rosemary extract was introduced in mixer 101, together with the hemp seeds and water. The processing of the hemp seeds and water into a hemp seed slurry was then conducted when the antioxidant was already introduced. Thus, in this test, the antioxidant was introduced at the earliest stage, again at a level of 0.005 wt% of the mixture.

All bases were stored under refrigerated conditions at 4°C. After two weeks, beverages were produced from each base using the formulation of "Trial 1: Test Example 1" (the respective base from the four tests replace the base in "Trial 1: Test Example 1"). A sensory evaluation was conducted with 63 individuals who rated whether they liked the beverage (taste and mouthfeel). Additionally, the anisidine value of each beverage, indicating the level of oxidation, was measured. The anisidine analysis was performed by Eurofins Chemical Control S.r.l. (Cuneo), under accreditation "UNI CEI EN ISO/IEC 17025:2018 ACCREDIA 0490L". The results are summarized in the table below:

| **Test no.** | **Share of persons liking the product** | **Anisidine value** |
|---|---|---|
| 1 | 44% | 22.5 |
| 2 | 40% | 20.1 |
| 3 | 43% | 13.8 |
| 4 | 76% | 7.8 |

The results indicate that the base from Test 4, where the antioxidant was introduced at the earliest stage, had both the highest approval rating and the lowest oxidation level. This demonstrates that early introduction of antioxidants significantly enhances both the sensory and stability characteristics of the final beverage. Without being bound by theory, it is believed that introducing the antioxidant prior to mixing-i.e., before the hemp seeds are crushed-allows the antioxidant to interact with sensitive compounds, such as unsaturated fats and amino acids, at the earliest possible stage. This early interaction may protect these compounds from immediate oxidative degradation initiated upon cell disruption, thereby reducing the formation of off-flavor precursors and improving the oxidative stability of the resulting base.

Preferably, the antioxidant is introduced during the formation of the hemp seed slurry (the processing of the hemp seeds), when the hemp seeds and water are mixed. Alternatively, the antioxidant may be introduced before hydrolyzation is initiated, or at the latest, before 50% of the hydrolyzation time has elapsed. As used herein, the term "hydrolyzation time" refers to the duration from the introduction of the enzyme responsible for hydrolysis to the time at which the hydrolysis is deactivated. As previously indicated, there is also a time aspect: the antioxidant is advantageously introduced to the hemp seed slurry within less than 60 minutes, or within less than 30 minutes, from the processing of the hemp seeds into a hemp seed slurry.

From the description above, it is evident that, although various embodiments of the invention have been described and illustrated, the invention is not limited to these embodiments. Instead, it can be embodied in other ways within the scope of the subject-matter defined in the following claims.

## Claims

1. A method (300) for producing a hemp seed base (12) to be used for human consumption, the method (300) comprising:
providing (S302) hemp seeds (10a);
processing (S304) the hemp seeds (10a) and water (10b) into a hemp seed slurry;
introducing (S306) one or more antioxidants (10c) to the hemp seed slurry, and
obtaining (S316) the hemp seed base (12) from the hemp seed slurry.

2. The method (300) according to claim 1, wherein the water (10b), in the processing (S304) of the hemp seeds (10a) and water (10b), has a temperature of 1-25°C, or 5-10°C.

3. The method (300) according to any preceding claim, comprising maintaining the hemp seed base (12) at a temperature below 40°C from the processing (S304) the hemp seeds until the hemp seed base (12) is subjected to an ultra-high temperature, UHT, process (S322).

4. The method (300) according to claim 3, comprising
maintaining the hemp seed base (12) at a temperature above 6°C from the processing (S304) the hemp seeds until the hemp seed base (12) is subjected to the UHT process (S322).

5. The method (300) according to any preceding claim, wherein the introducing (S306) the one or more antioxidants (10c) comprises dosing the one or more antioxidants (10c) to the hemp seed slurry with a rate of 1-15 I/h, or 3-8 I/h.

6. The method (300) according to any preceding claim, wherein at least one of the one or more antioxidants (10c) is a rosemary extract, tocopherol or vitamin C.

7. The method (300) according to claim 6, wherein the hemp seed base (12) has a total rosemary extract content in the range of 0.001-0.01% by weight.

8. The method (300) according to any preceding claim, wherein the introducing (S306) the one or more antioxidants (10c) to the hemp seed slurry comprises dosing the one or more antioxidants (10c) to the hemp seed slurry within less than 60 minutes from the processing (S304) the hemp seeds (10a).

9. The method (300) according to any preceding claim, comprising prior to processing (S304) the hemp seeds (10a), introducing the one or more antioxidants (10c) to the water (10b).

10. The method according to any one of the preceding claims, comprising:
introducing (S308) one or more enzymes (10e) to the hemp seed slurry, and
hydrolyzing (S310) the hemp seed slurry.

11. The method (300) according to claim 10, wherein at least one of the one or more enzymes (10d) is Ultraflo XL, Ultraflo Max, Protamex, Neutrase or Formea Prime.

12. A method for producing a hemp seed beverage (14) to be used for human consumption, the method (300) comprising:
producing a hemp seed base (12) according to any preceding claim, and
mixing (S318) and processing (S322) the hemp seed base (12) and one or more ingredients (10d) to form the hemp seed beverage (14).

13. The method according to claim 12, comprising
introducing (S320) one or more further antioxidants (10c) during the producing of the hemp seed beverage (14), to thereby give the hemp seed beverage (14) a total antioxidant content in the range of 0.001-0.01% by weight.

14. The method according to claim 12 or 13, comprises introducing one or more aromas during the process of producing the hemp seed beverage (14) for masking and/or reducing at least one undesired taste characteristic, to thereby give the hemp seed beverage (14) a total aroma content in the range of 0.05-0.25% by weight.

15. The method (300) according to claim 14, wherein at least one of the one or more aromas is a masker cereal, vanilla aroma, citrus aroma, or mint aroma.

16. The method (300) according to any one of claims 12 to 15, comprising performing a UHT process (S322) on the hemp seed beverage (14) immediately after the hemp seed beverage (14) is formed, without performing any intermediate storing of the hemp seed beverage (14) before the UHT process (S322).
